(19)

Europäisches
Patentamt
European
Patent Office
Office européen
des brevets

(11) **EP 4 471 111 A1**

(12) **EUROPEAN PATENT APPLICATION**

(43) Date of publication:
**04.12.2024 Bulletin 2024/49**

(21) Application number: **24177029.6**

(22) Date of filing: **21.05.2024**

(51) International Patent Classification (IPC):
*C10K 3/02* (2006.01)   *C10G 2/00* (2006.01)
*C01B 3/12* (2006.01)   *C01B 3/38* (2006.01)
*C01B 3/48* (2006.01)   *C10J 3/00* (2006.01)
*C25B 1/04* (2021.01)

(52) Cooperative Patent Classification (CPC):
**C10G 2/30; C01B 3/12; C01B 3/386; C01B 3/48;
C10J 3/00; C10K 3/026; C25B 1/04;**
C01B 2203/0238; C01B 2203/0244;
C01B 2203/062; C01B 2203/085; C01B 2203/1064;
C01B 2203/107

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.05.2023 PCT/EP2023/064418**

(71) Applicant: **NEXTCHEM TECH S.p.A.
00156 Rome (IT)**

(72) Inventors:
• **BASINI, Luca
20129 Milano (IT)**
• **BATISTINI, Antonio
55049 Camaiore (LU) (IT)**
• **FERRARI, Fabio
21025 Comerio (VA) (IT)**

(74) Representative: **Zanoli, Enrico et al
Zanoli & Giavarini S.p.A.
Via Melchiorre Gioia, 64
20125 Milano (IT)**

(54) **PROCESS FOR THE PRODUCTION OF SYNTHETIC HYDROCARBONS COMPOUNDS BY UTILIZING CARBON DIOXIDE-RICH FEEDSTOCK**

(57)    A process to produce synthetic hydrocarbon compounds comprises the steps of:
a) producing a syngas by means of a short contact time catalytic partial oxidation process which uses a feedstock comprising a mixture of carbon dioxide included in natural gas and other gases, and carbon dioxide captured from gaseous streams, said carbon dioxide being from 5 to 50% v/v of said mixture; and air, oxygen, air enriched with oxygen, and optionally steam;
b) feeding said syngas to a Fischer-Tropsch reactor to produce liquid hydrocarbons by a Fischer-Tropsch process;
c) collecting said liquid hydrocarbon compounds from said Fischer-Tropsch reactor. Also described is an apparatus to carry out the process.

**FIG. 3B**

EP 4 471 111 A1

**Description**

The present invention relates to a process for the production of synthetic hydrocarbons compounds by utilizing carbon dioxide-rich feedstock. The invention also relates to an apparatus for carrying out this process.

BACKGROUND OF THE INVENTION

The $CO_2$ concentration in the atmosphere has overcome, in 2016, the 400 ppm after having remained between 100 ppm and 300 ppm for thousands of years before, during and after the industrial revolution periods.

The relevance of a combined effort for reducing the usage of fossil fuel and for developing $CO_2$ utilization solutions incorporating this molecule into fuels, chemicals and materials, was already clear in the 90s, when extensive studies were focused on possible $CO_2$ utilization pathways based on its physical properties (i.e. supercritical extractions, enhanced oil recovery, various usages as inert gas) and its chemical properties (i.e. for obtaining acetic acid, alcohols and their derivatives, polycarbonates, urea, inorganic carbonates, synthetic natural gas, liquid HC fuels).

However, till nowadays, a negligible amount of the $CO_2$ produced by industrial activities is used. This occurs because the available processes solutions remain relatively inefficient and costly because they are designed with a poor systemic approach. Despite this, major and continuous efforts are continuing for improving the current situation that will not be sustainable for near future generations.

In view of the foregoing, there is the need of innovative process and technology solutions for consuming $CO_2$ rich reactant streams, and a task of the present invention is to provide a new process for using $CO_2$ rich reactant streams in a process that includes the Fischer-Tropsch (F-T) synthesis to produce liquid hydrocarbons compounds and olefins.

Indeed, this is a particularly complex task since it requires the initial conversion of the $CO_2$ molecules into synthesis gas whose main components are CO and $H_2$ in a ratio that for the F-T processes, need to be close to 2 v/v. More in detail, F-T catalytically converts the synthesis gas into a spectrum of hydrocarbon chains, including a fraction of oxygenates (see equations 1-3 below), while the water gas shift reaction (WGS, see equation 4 below) may also occur, depending on the catalyst affecting the syngas composition and final product distribution.

$$n\,CO + (2n+1)\,H_2 \rightarrow C_nH_{2n+2} + n\,H_2O \qquad [1]$$

$$n\,CO + 2n\,H_2 \rightarrow C_nH_{2n} + n\,H_2O \qquad [2]$$

$$n\,CO + 2n\,H_2 \rightarrow C_nH_{2n+2}O + (n-1)\,H_2O \qquad [3]$$

$$CO + H_2O \rightarrow CO_2 + H_2 \qquad [4]$$

Selection of catalyst and optimization of both reactor configuration and process parameters allows to maximize efficiency and achieve desired product selectivity. It is briefly mentioned that F-T reactor solutions are: i) slurry bubble column (SBCR), ii) multi-tubular trickle-bed, iii) circulating fluidized-bed, and iv) fixed fluidized-bed reactors.

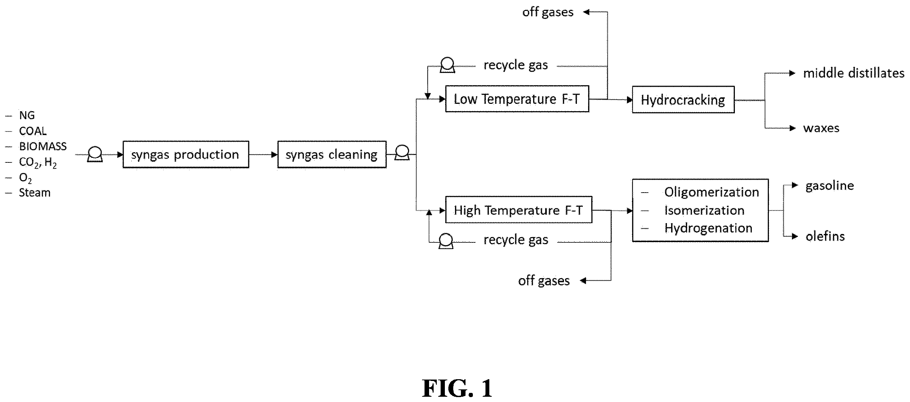

Figure 1 includes a simplified scheme with the main unit operations of the F-T processes, with indications of the reactants and the achievable products.

Briefly, it is mentioned that feedstock is converted into synthesis gas (syngas) that is purified and sent to the F-T reactors that, depending on their operation condition, design and catalysts used, can originate linear hydrocarbons (low temperature F-T) or branched hydrocarbons (high temperature F-T). These hydrocarbons are subjected to hydrotreating, oligomerization, isomerization, hydrogenation steps to originate: i) middle distillates (i.e., gasoils), ii) waxes, iii) gasoline, iv) olefins.

Noteworthy, in order to include $CO_2$ into the products achievable with the F-T processes, it is necessary not only to convert this molecule into synthesis gas (i.e., CO and $H_2$) but also to avoid or to reduce the $CO_2$ emissions associated to: i) the reactant/reaction heating, ii) the compression steps, iii) the recycle flow of the unconverted synthesis gas of the F-T loop and iv) the purge of the gaseous hydrocarbon molecules (e.g. $CH_4$) and $CO_2$ molecules, not useful to the F-T synthesis, for avoiding their build-up in the F-T reactant recycle loop.

For what concerns the production of synthesis gas from $CO_2$ containing streams, it is noted that two reactions, named as reverse water gas shift (RWGS) reaction [5] and/or dry reforming reaction [6] can be utilized:

$$CO_2 + H_2 \rightarrow CO + H_2O \qquad\qquad \Delta H^\circ = 42 \text{ kJ/mol} \qquad [5]$$

$$CH_4 + CO_2 \rightarrow 2CO + 2\,H_2 \qquad\qquad \Delta H^\circ = 247.3 \text{ kJ/mol} \quad [6]$$

However, these two reactions require high temperatures to occur and, particularly reaction [6], that is strongly endothermic, also require an extremely high energy input.

More in detail, it is noted that the RWGS reaction [5] requires, for achieving a good $CO_2$ conversion and for avoiding methane production through equations [7] and [8] temperatures; typically, above 850 °C.

$$CO + 3\,H_2 \rightarrow CH_4 + H_2O \qquad \Delta H = -206\ kJ/mol \qquad [7]$$

$$CO_2 + 4\,H_2 \rightarrow CH_4 + 2H_2O \qquad \Delta H = -164\ kJ/mol \qquad [8]$$

PRIOR ART

Indeed, a solution, known as *CAMERE* process, aiming at the production of methanol, was demonstrated till a relatively large pilot scale but did not result into a viable industrial technology since the integration of a RWGS operating at high temperature (ca. 900 °C) and pressure (ca. 30 -50 ATM) required the usage of a furnace emitting $CO_2$ containing gases that contributed on the overall net production of $CO_2$ per ton of produced methanol. The weaknesses of the original *CAMERE* processes could be improved by utilizing electrified RWGS reactors (E-RWGS) and $H_2$ produced from steam/water electrolysis, but also in this case minor $CO_2$ positive emissions, between 0.04 - 0.15 per ton of produced methanol, would be produced. Only the usage of $CO_2$ contained in a bio-gas source and of electric energy sources with a carbon footprint lower than 120 $gCO_2$/kWh would determine negative $CO_2$ emissions.

Another solution that partially improves the emissions associated to the RWGS heated by an external furnace is the autothermal reverse water gas shift (A-RWGS) reactor that includes a burner followed by a catalytic bed. In this case some $O_2$ is mixed to the $CO_2$ and flowed inside the burner at high temperatures. The $O_2$ streams combust a portion of the $H_2$ and, if present, the hydrocarbon molecules, releasing the heat required for raising the reaction temperature above 850 °C.

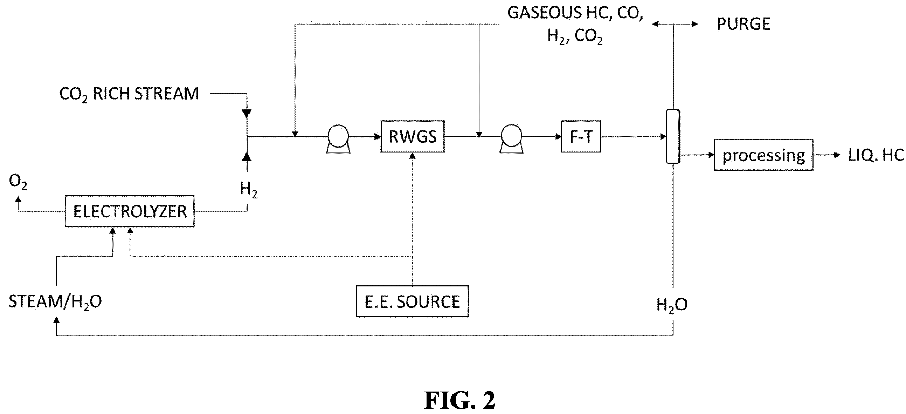

Figure 2 includes a simplified and "state of the art" process scheme integrating RWGS and F-T unit operations. In this scheme the source of $H_2$ to be mixed with the $CO_2$, is steam electrolysis (e.g., Alkalyne Electrolysis - AE, Proton Exchange Membrane Electrolysis - PEME, Solyd Oxide Elkectrolyzer Cell - SOEC) that also produces an $O_2$ flow that is vented. Noteworthy, with the AE term we synthetically describe the alkaline water electrolyzers which also include technologies utilizing solid polymeric membrane electrolytes also referred to as Alkaline Electrolyte Membrane (AEM) electrolyzers.

The scheme also considers that the tail gases of the F-T reactor can be either recycled to F-T reactor itself and/or combined with the $H_2$ and the $CO_2$ rich flow for being sent to the RWGS reactor. The obtained syngas mixture is then compressed prior to being fed to the F-T Synthesis Unit. Noteworthy, this process will require to purge the tail gas recycle for avoiding the build-up of small (C1-C5) hydrocarbon molecules and $CO_2$ in the F-T recycle loop.

For what concerns the $CO_2$ reforming reaction [6], as already mentioned, this reaction not only requires high temperatures, but it is also highly endothermic. Moreover, currently, only steam-$CO_2$ reforming technologies, are industrially available and their reactants mixture composition and their operation conditions, particularly at high pressure, are limited by carbon formation reactions. In other words, the steam-$CO_2$ reforming technologies are limited by thermodynamic and kinetic affinity towards carbon formation reactions occurring at the surfaces of the catalysts.

The occurrence of carbon formation reactions determines limitations in the operation conditions; these limitations particularly affect the possibility of lowering or avoiding the steam content in the reactant mixtures. More in detail, the carbon formation reactions are particularly relevant at pressures between 15 - 40 ATM.

$$2\,CO = CO_2 + C \qquad \Delta H° = -171\ kJ/mol \qquad [9]$$

$$CO + H_2 = H_2O + C \qquad \Delta H° = 131\ kJ/mol \qquad [10]$$

$$CH_4 = 2\,H_2 + C \qquad \Delta H° = 75\ kJ/mol \qquad [11]$$

$$C_nH_m\ (g) = olefins\ (g) = coke\ (s) \qquad [12]$$

Indeed, particularly reactions [9] and [11-12] are the primary sources of carbon that can be divided into three typologies: i) whisker carbon, ii) gum (encapsulating carbon), and iii) pyrolytic carbon.

Gum formation and pyrolytic carbon are especially associated with the presence of hydrocarbons with more than two carbon atoms in the feedstock and can be avoided by removing these molecules with a pre-reformer unit upstream dry reforming.

Instead, the production of whisker carbon can only be avoided by operating in condition having a low thermodynamic affinity towards this species which, once formed, brings to the catalyst pellet destruction and to the plant shut down due to the necessity of avoiding that the heat flow from the furnace not adsorbed by the endothermic reactions could lead to tubes overheating and fracturing.

Therefore, one of the primary tasks in the development of a low steam, steam-$CO_2$ reforming processes, is the careful theoretical and experimental analysis of the allowed carbon-free operating conditions.

Nickel, cobalt, and noble metal catalysts, among others, have been extensively studied as potential catalysts for steam-$CO_2$ reforming, with nickel and particularly Ni-Mg and Ni-Mg-Al mixed oxide systems deposited on an alumina support, being the most investigated system, as Ni catalysts, cost-wise, are the most attractive catalyst. Noble metal catalysts are also utilized since they typically have a lower kinetic affinity for carbon formation and a higher activity for steam-$CO_2$ reforming reactions.

In addition, it is noted that the $CO_2$ consumption features in steam-$CO_2$ reforming is also limited by the emissions determined by the heating furnaces. Indeed, the $CO_2$ reforming reaction [6] requires ca. 22% of enthalpy more than steam reforming [13] and this heat is currently provided in heating furnaces with reactions such as [14]

$$CH_4 + H_2O = 3H_2 + CO \qquad \Delta H° = +206 \text{ kJ/mole} \quad [13]$$

$$CH_4 + 2O_2 + 4N_2 = CO_2 + 2H_2O + 4N_2 \qquad \Delta H° = -802 \text{ kJ/mole} \quad [14]$$

Since the heat transferred into the reaction inside the reforming tubes is roughly the 50% of the heat released by the combustion reactions [8], it can be estimated that per any $CO_2$ molecule consumed with reaction [6] ca 0.6 $CO_2$ molecules would be produced when the reaction heat is provided by burning $CH_4$ molecules. This, if added to the heating and compression requirements of the reactant mixture that also contains relevant amounts of steam, does not allow to steam-$CO_2$ reforming technologies to become efficient "$CO_2$ utilization machines".

Despite these difficulties, some companies have defined and commercialize steam-$CO_2$ reforming processes in which some steam addition prevents the above-mentioned carbon formation reactions, while pure dry reforming is not currently available.

In conclusion, it is mentioned that TOPSOE A/S has also developed a process solution in which a hot $CO_2$ containing stream is added to the synthesis gas produced by a steam reformer operating at low steam vs. carbon ratios. In this way a $CO_2$ enriched synthesis gas is transformed in a subsequent Adiabatic POst Converter (APOC) reactor in conditions in which the thermodynamic affinity towards the carbon formation reactions is greatly reduced. Indeed, in the APOC reactor the $CO_2$ is transformed with a reverse water gas shift reaction into CO and $H_2O$. The use of the APOC provides then a method for tailoring a synthesis gas composition in a wide range of $H_2$ vs CO ratio minimizing the risk of carbon formation.

However, it is noted that these steam-$CO_2$ reforming processes are not currently used for producing the synthesis gas for F-T synthesis reactors.

WO 2016/016256 A1 discloses an integrated SCT-CPO/ATR process for the production of synthesis gas that can be used in Fischer-Tropsch processes. There is no disclosure of producing syngas via reverse a water gas shift reaction and combining said syngas with syngas produced via the SCT-CPO process. Furthermore, there is no disclosure of a SCT-CPO reactor with the specific structure disclosed in the present application.

US 2010/294994 A1 describes a process for the production of syngas by means of a reactor provided with four sections (I, II, III, IV, Fig. 2) in which the first and the second zones include: i) a device for the nebulization of a liquid hydrocarbon feedstock and ii) a nebulization and mixing chamber for providing a reactant mixture that is subsequently converted into synthesis gas in a reaction zone included in section III having a cylindrical shape and layered catalytic structures for converting the mixture of nebulized liquid hydrocarbons with the oxidant flow.

BRIEF DESCRIPTION OF THE INVENTION

An aspect of the present invention is a process to produce hydrocarbon compounds by converting syngas by means of a Fischer-Tropsch process, characterized in that said syngas comprises a part produced by means of a short contact time catalytic partial oxidation process and a part produced by reverse water gas shift process; wherein:

A) said short contact time catalytic partial oxidation process uses a feedstock comprising:

i) a first stream comprising a mixture comprising carbon dioxide included in one or more of natural gas, associated gases, off-gases of industrial activities, biogas, blast furnace gases, coke oven gases, direct reduction gases and carbon dioxide captured from gaseous streams, said carbon dioxide being from 5 to 50% v/v of said mixture;
ii) a second stream comprising oxygen or air enriched with oxygen, and optionally steam; wherein:

- said oxygen is obtained from electrolysis of water and from air; and
- said electrolysis of water or steam produces also hydrogen which is mixed to the syngas and fed to said Fischer-Tropsch process;

iii) a third-stream comprising tail gas released from said Fischer-Tropsch process;
said short contact time catalytic partial oxidation process is carried out in a reactor on a catalytic bed comprising a portion with truncated cone geometry operated at a gas hourly space velocity from 15,000 to 500,000 $h^{-1}$;

B) said reverse water gas shift process uses a feedstock comprising a mixture of hydrogen and carbon dioxide, wherein:

i) said carbon dioxide is from 10 to 70% v/v of said mixture;
ii) said hydrogen is from 10 to 70% v/v of said mixture and is optionally produced by the water/steam electrolysis section.

C) said liquid hydrocarbon compounds are collected from a Fischer-Tropsch reactor in which said Fischer-Tropsch process is carried out.

Another aspect of the invention is an apparatus for producing synthetic hydrocarbon compounds with the process defined above, comprising a short contact time catalytic partial oxidation reactor including a first portion having a cylindrical shape consisting of an inlet a mixing zone and a thermal shield zone, a second portion containing a catalytic bed having a truncated cone shape, and a third portion having a cylindrical shape with a diameter greater than the diameter of said first cylindrical portion, followed by a second thermal shield zone, wherein:

a) in said second portion having the shape of a truncated cone the upper base is smaller than the bottom base;
b) said upper base of said truncated cone is joined to said first cylindrical portion and said bottom base is joined to said third cylindrical portion; and
c) the external angle ($\alpha$) of said truncated cone at the upper base is lower than 85° and preferably lower than 75°.

The term "associated gas" designates a gas produced as a byproduct of the production of crude oil. Associated gas is generally regarded as an undesirable byproduct, which is either reinjected, flared, or vented.
The term "off-gas" designates a gas produced as a byproduct of a chemical process.
The term "tail gas" designates gases and vapors released into the atmosphere from an industrial process after all reactions and treatments have taken place.
The term "electrolysis of steam" or "steam electrolysis" means the High-temperature electrolysis; as known in the field.
Noteworthy, the SCT-CPO reactor has the unique features described above that allow the utilization of $CO_2$ rich feedstock and of the F-T tail gases and off-gases produced in the separation and/or upgrading of the primary F-T products for producing a synthesis gas that will be utilized in the F-T synthesis. This allows the incorporation of carbon dioxide in the reaction products as it will be described in the following detailed description of the invention. This $CO_2$ utilization would not be allowed by the existing synthesis gas production technologies due to: i) the occurrence of carbon formation reactions [9-12] and ii) the possibility allowed only by SCT-CPO to avoid heating furnaces for pre-heating the reaction mixture and consequently avoiding $CO_2$ emissions in the heating furnaces.

<u>DETAILED DESCRIPTION OF THE INVENTION</u>

The invention is described also with reference to the accompanying drawings, wherein:

- Fig. 1 is a simplified state-of-the-art process scheme with the main unit operations of the via F-T processes and indications on the reactants and the achievable products.
- Fig. 2.is a simplified "state of the art" process scheme integrating RWGS or E-RWGS or A-RWGS and F-T unit operations for transforming CO2 rich streams into synthesis gas to be used in F-T reactors. Noteworthy, in this scheme the source of H2 to be mixed with the CO2 is steam electrolysis (AE, PEM, SOEC) that also produce an O2 flow that is vented.

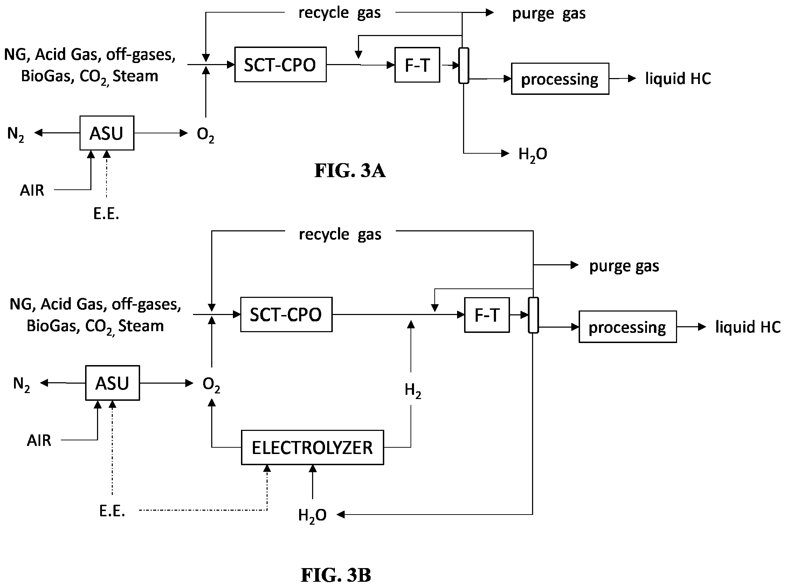

- Fig. 3 is a general description of a state-of-the-art process (A) and of the innovative process (B) in which the SCT-CPO reactor is integrated with steam/water electrolysis (AE, PEME, SOEC), for processing $CO_2$ rich reactant stream with $CO_2$ molecules included either in a make-up gas and/or in the F-T off-gases for minimizing the purge gas emissions.

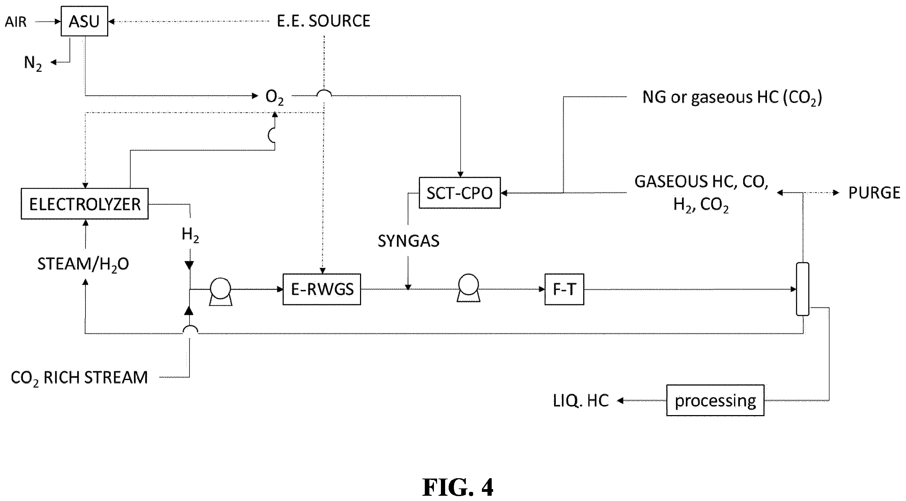

- Fig. 4 is a process scheme for converting $CO_2$ rich streams into the production of liquid hydrocarbons, via SCT-CPO, through the intermediate formation of a syngas by combining E-RWGS and SCT-CPO. Noteworthy, the syngas produced by SCT-CPO is obtained entirely from the purge gas of the F-T recycle loop. In case that all the F-T recycle gas is sent to SCT-CPO the purge gas is completely avoided.

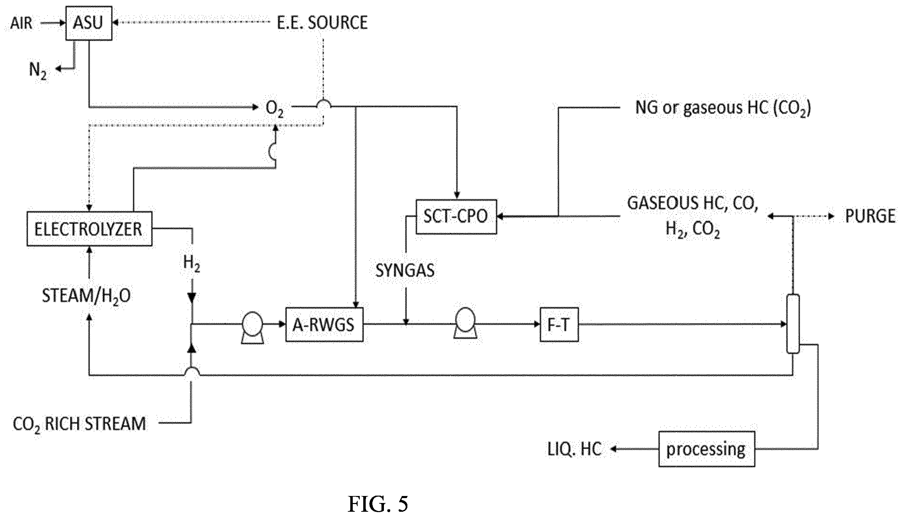

- Figure 5 is a process scheme for converting $CO_2$ rich streams into the production of liquid hydrocarbons, via SCT-CPO, through the intermediate formation of a syngas by combining A-RWGS and SCT-CPO. Noteworthy, the syngas produced by SCT-CPO can be obtained entirely from the purge gas of the F-T recycle loop, or by the combination of purge gas from F-T with natural gas and/or other gaseous hydrocarbons. In case that all the F-T recycle gas is sent to SCT-CPO the purge gas is completely avoided.

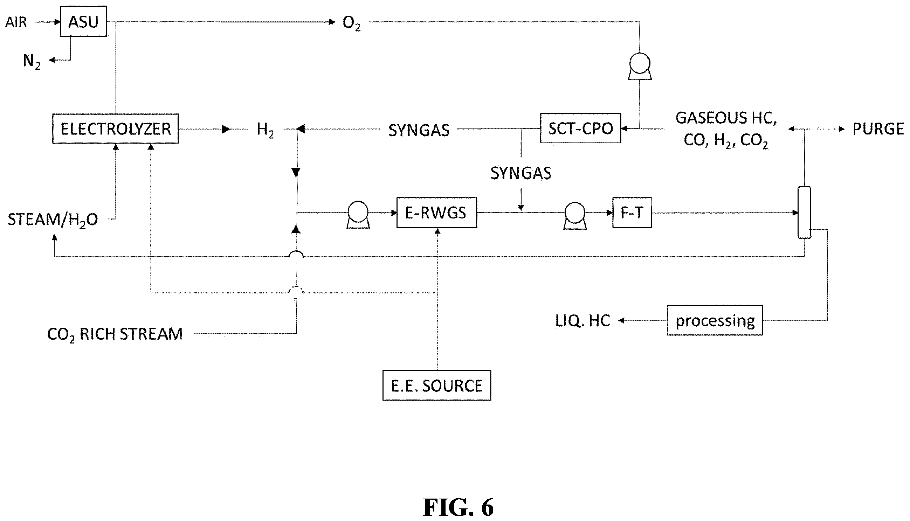

- Figure 6 is a process scheme for converting $CO_2$ rich streams into the production of liquid hydrocarbons, via SCT-CPO, through the intermediate formation of a syngas by combining E-RWGS and SCT-CPO. In this scheme the syngas produced by SCT-CPO is obtained by mixing gaseous hydrocarbon stream also including $CO_2$ and all or part of the F-T recycle loop. In case that all the F-T recycle gas is sent to SCT-CPO the purge gas is completely avoided.

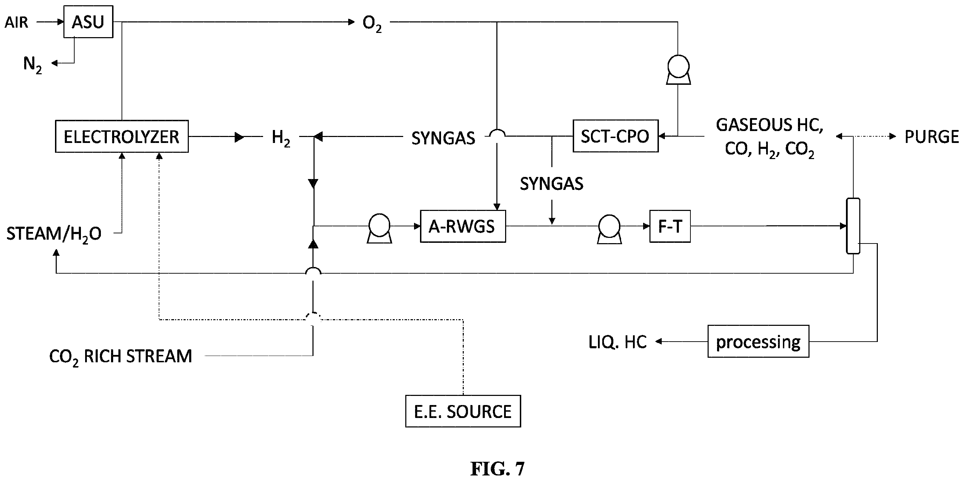

- Figure 7 is a process scheme for converting $CO_2$ rich streams into the production of liquid hydrocarbons, via SCT-CPO, through the intermediate formation of a syngas by combining A-RWGS and SCT-CPO. In this scheme the syngas produced by SCT-CPO is obtained by mixing gaseous hydrocarbon stream also including $CO_2$ and all or part of the F-T recycle loop. In case that all the F-T recycle gas is sent to SCT-CPO the purge gas is completely avoided.

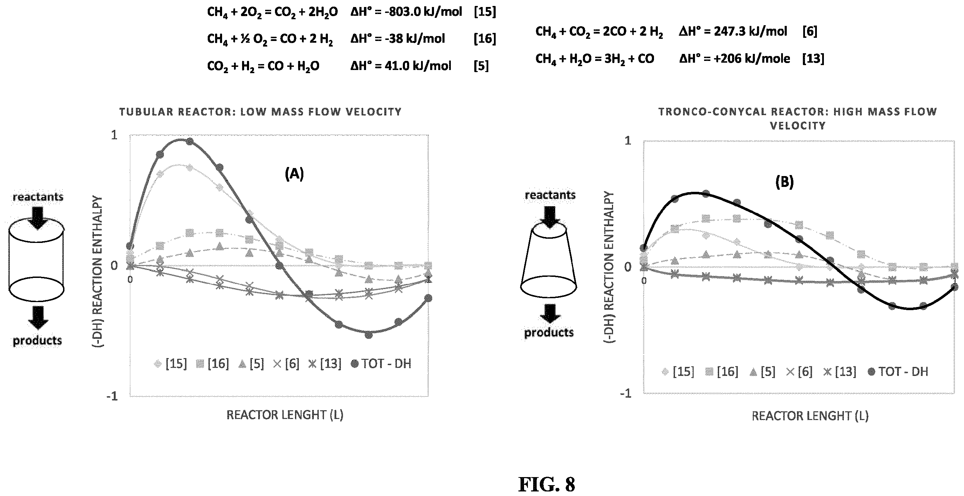

- Fig. 8(A) is a qualitative drawing of the enthalpy/temperature contributions determined by reactions [15], [16], [5], [6] and [13] occurring along a tubular reactor including a fixed catalytic bed operated at low mass flow velocity; the solid line represents the total enthalpy variation.
- Fig. 8(B) is a qualitative drawing of the enthalpy/temperature contributions determined by reactions [15], [16], [5], [6] and [13] occurring along a truncated cone geometry including a fixed catalytic bed operated at high mass flow velocity; the solid line represents the total enthalpy variation.

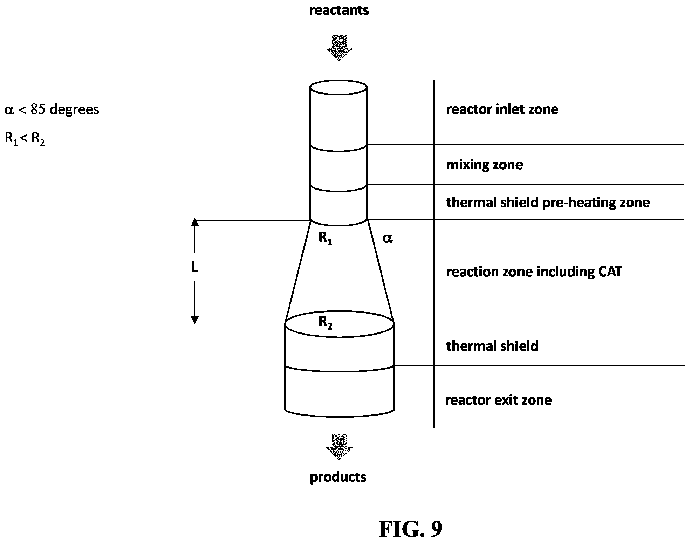

- Fig. 9 is a scheme of the internal zones of a SCT-CPO reactor with a truncated cone reaction zone with elements on the geometry of the truncated cone zone

Figures 3, 4, 5, 6 and 7 include schematic drawings describing the process according to the invention.
The process and apparatus according to the present invention overcome the steam-CO2 reforming and the dry reforming drawbacks related to the occurrence of carbon formation reactions and reduce the relevance of the RWGS and hence the $H_2$ requirements. This is done by utilizing short contact time - catalytic partial oxidation (SCT-CPO) reactors integrated in process solutions that allow the $CO_2$ conversion into syngas and the avoidance or the strong reduction of the purge flow of the F-T recycle loop since this purge can also be utilized in the SCT-CPO feedstock.
The innovative process solutions here described also allow the utilization of the co-produced $O_2$ stream associated to the $H_2$ production with steam/water electrolysis.
This SCT-CPO reactor is particularly advantageous for utilizing $CO_2$ rich feedstock since the reactivity features and operation conditions are not limited by the carbon formation reactions affecting the steam-CO2 reforming reactors.
Instead, the presence of the $CO_2$ in the SCT-CPO reactor has an inhibiting effect towards the parasitic gaseous phase radical reactions that, particularly in high pressure conditions, are the only reactions that could lead to unsaturated hydrocarbon molecules formation that could possibly aggregate and decompose for producing carbonaceous deposits.
More in detail, with the here described SCT-CPO reactor solutions, we have found that:

i) the presence of $CO_2$ in the reactant mixture inhibits the propagation of the unselective radical reactions inside the reactant/product gaseous mixture progressing inside the SCT-CPO reactor.
ii) the $CO_2$ participates the heterogeneous chemistry inside the catalytic bed after that relevant amounts of hydrocarbons have been already transformed into synthesis gas.
iii) the $CO_2$ reacts with the produced $H_2$ through an internal RWGS in the last section of the SCT-CPO reactor catalytic bed.

Noteworthy, only the reactor structure according to the invention is effective for producing these reactivity features while other CPO reactors utilizing tubular and fixed bed reactors, fluidized bed, moving beds, or bubbling bed reactors cannot be applied in the conditions here described.

Moreover, it is noted that the SCT-CPO technology is discussed in numerous patent documents, including WO2016016257 (A1), WO2016016256 (A1), WO2016016253 (A1), WO2016016251 (A1), WO 2011151082, WO 2009065559, WO 2011072877, US 2009127512, WO 2007045457, WO 2006034868, US 2005211604, WO 2005023710, WO 9737929, EP 0725038, EP 0640559. Extensive technical and scientific literature has also been produced and mentioned in the following references:

"Issues in H2 and synthesis gas technologies for refinery, GTL and small and distributed industrial needs"; Basini, Luca, Catalysis Today, 106 (1-4), p. 34, Oct 2005.
"Fuel rich catalytic combustion: Principles and technological developments in short contact time (SCT) catalytic processes"; Basini, L.; Catalysis Today, 117 (4), 384-393; DOI: 10.1016 / j.cattod.2006.06.043 Published: 15 October 2006
"Natural Gas Catalytic Partial Oxidation: A Way to Syngas and Bulk Chemicals Production | IntechOpen"; G. Iaquaniello, E. Antonetti, B. Cucchiella, E. Palo, A. Salladini, A. Guarinoni, A. Lainati and L. Basini; http://dx.doi.org/10.5772/48708
"Short Contact Time Catalytic Partial Oxidation (SCT-CPO) for Synthesis Gas Processes and Olefins Production"; L.E. Basini, A. Guarinoni, Ind. Eng. Chem. Res. 2013, 52, 17023-17037; https://doi.org/10.1021/ie402463m

The term "short contact time catalytic partial oxidation" (SCT-CPO) has a well-defined meaning either in the scientific, technical, and patent literature. As used in the present invention, however, certain aspects are quite specific for what concerns the combination of the characteristics of the reactor and the operation conditions.

We have found that the utilization of specific SCT-CPO reactors and operation conditions, improves the possibility of transforming $CO_2$ rich stream into a $H_2$ and CO rich syngas for producing chemical and fuels while completely avoiding the occurrence of conditions in which the carbon formation reactions are produced either for kinetics or thermodynamic reasons in steam-$CO_2$ reforming reactor.

Moreover, we have found that, inside the here described SCT-CPO reactors, the $CO_2$ reacts mainly through the reverse water gas shift (RWGS) reaction in the last section of the catalytic bed after that the gaseous hydrocarbons and the oxygen containing flows have been largely converted into a mixture of $H_2$ and CO. In this way, in the same SCT-CPO reactor, it is possible to obtain the results that would have been obtained by combining the steam-$CO_2$ reforming or dry reforming and APOC reactors, but in conditions in which the carbon formation reactions [9-12] do not occur.

It is also mentioned that SCT-CPO technology requires moderate pre-heating of the reactant mixtures, and the heat required for this moderate pre-heating can be obtained by recovering the heat contained in the synthesis gas, hence avoiding the utilization of fire heaters and avoiding the $CO_2$ emissions that this use would produce.

The use of the specific solutions for SCT-CPO reactors, and operation conditions, would then provide a unique mean for obtaining CO and $H_2$ rich syngas production suitable for chemical and fuel products with F-T by integrating substantial amounts of $CO_2$ into the final products.

More specifically, it has been found that the SCT-CPO based technology solutions, here described, allow the utilization of hydrocarbon feedstock also including relevant amounts of $CO_2$. Indeed, the $CO_2$/C v/v in the hydrocarbon feedstock can be comprised between 0 - 1.5 v/v and preferentially between 0.2 - 1.0 v/v) in a wide range of pressure (1 - 80 ATM and preferentially between 5 - 50 ATM) and temperature (inlet temperatures comprised between 100 and 500 °C and preferentially between 150 and 400 °C) without incurring in the carbon formation reactions.

Noteworthy, the SCT-CPO reactor feedstock may include the F-T recycle gas stream with no or minor amounts of fresh gaseous HC feedstock. This allows the conversion into synthesis gas of the small hydrocarbon molecules and of the $CO_2$ that do not participate to the F-T reactions and that will build up in the F-T recycle loop, thus requiring purge gas emissions. Particularly the process solutions integrating: i) E-RWGS or A-RWGS, ii) SCT-CPO, iii) F-T and iv) electrolyzers (as described in figures 4-7) allow unique possibility of including $CO_2$ and $CO_2$ containing streams into hydrocarbon compounds with very effective $CO_2$ sink process solutions.

It is also reported that the SCT-CPO reactor here described with a truncated cone geometry of the catalytic bed can operate at Gas Hourly Space Velocity Values comprised between 15,000 - 500,000 $h^{-1}$ and preferentially between 30,000 - 250,000 $h^{-1}$.

The catalysts can be any suitable material comprising a support with a pelletized or a monolith structure having active metal species onto their external surface. Examples of these catalysts are included in WO 2022/263409 A1.

The possibility of complete utilization of the F-T unconverted gaseous stream is particularly useful for single pass F-T reactors.

It has also been found that the process and apparatus of the invention allow the operation of SCT-CPO reactors with a moderate pre-heating of the reactants that can be provided with gas-gas heat exchangers recovering the heat from the produced synthesis gas.

EP 4 471 111 A1

For what it concerns the RWGS, E-RWGS, A-RWGS reactors, it is mentioned that they can be operated at pressures comprised between 1 - 100 ATM and preferentially between 20 - 80 ATM), and temperatures between 850 - 1200 °C and preferentially between 900 - 1050 °C. The catalysts may be any suitable transition metal oxide for example, Nickel Oxide, Iron Oxide, Chromium Oxide. The $H_2/CO_2$ ratios may be comprised between 0.5 and 2.5 v/v and preferentially close to 1.0 v/v depending on the desired composition of the synthesis gas and the GHSV values can be comprised between 3,000 - 50,000 $h^{-1}$.

In this way the combination of the above-mentioned technologies allows the $CO_2$ utilization as a synthon for obtaining a syngas with suitable $H_2$ vs CO ratio for utilization in the F-T synthesis.

The F-T synthesis step may comprise one or more F-T reactors including F-T catalysts and can be performed according to anyone of the known processes, using anyone of the known catalysts such as those including Iron or Cobalt active species.

As already mentioned, (see Figure 1) the F-T steps can be differentiated between high-temperature processes with reaction temperatures typically between 320-360 °C and low-temperature processes, with reaction temperatures typically between 220-250 °C.

The high-temperature processes typically utilize catalysts containing Iron species and utilize a synthesis gas with $H_2/CO$ ratios between 0.8 - 2.0 v/v and preferentially between 1.2 - 1.8 v/v.

The low-temperature F-T processes utilize catalysts containing Cobalt species and utilize a synthesis gas with $H_2/CO$ ratios between 1.8 - 2.5 v/v and preferentially between 1.9 - 2.2 v/v. Pressures can be comprised between 1 - 100 ATM and preferentially between 10-80 ATM.

The GHSV values may be comprised between 1,000 - 25,000 $h^{-1}$, depending on the reactor solutions, namely fixed-bed, slurry-phase, bubble column reactors.

Noteworthy the described process solutions also utilize $H_2$ and $O_2$ sources such those produced by steam and water electrolysis and in some process configurations, integrate the syngas production obtained with SCT-CPO with the syngas production obtained by a RWGS reactor and particularly by a E-RWGS or A-RWGS reactors.

Figure 3 (A) shows how the SCT-CPO and F-T steps can integrate by feeding the SCT-CPO reactor with part of the F-T loop recycle gas for reducing or avoiding the purge gas emissions. Figure 3 (B) shows how the scheme can be further implemented with steam or water electrolysis. In this case the amount of the $CO_2$ in the reactant flow and the addition of $H_2$ to the produced synthesis gas are balanced for reaching the $H_2/CO$ ca. 2 v/v before entering in the F-T reactor.

The oxygen from air is obtained by means of a method selected from a cryogenic air separation unit (ASU), or other methos such as vacuum pressure swing adsorption, membrane separation.

The $O_2$ co-produced by steam or water electrolysis is fed to the SCT-CPO reactor. Noteworthy, the gaseous hydrocarbon feedstock can be composed by natural gas, liquefied petroleum gas (LPG), naphtha and/or gaseous mixtures having a biomass origin, and/or gaseous mixtures produced by other industrial activities; such as refinery off-gases, gaseous feedstock associated to chemical and petrochemical productions, gaseous feedstocks associated to oil productions (designated as "associated gases"), gaseous feedstocks associated to the iron and steel productions such as blast furnace gases (BFG), coke oven gases (COG), direct reduction gases (DRG).

Figure 4 and 5 shows how the F-T, SCT-CPO, E-RWGS or A-RWGS and steam or water electrolysis can be integrated by feeding the SCT-CPO reactor only with part or all the F-T recycle gas for reducing or completely avoiding any purge gas stream.

The feedstock fed to the RWGS reactor may contain a mixture of carbon dioxide in which the carbon dioxide is from 10 to 70% and the hydrogen is from 10 to 70% v/v of the mixture, which optionally comprises also hydrogen contained in the syngas produced in the short contact time catalytic partial oxidation reactor.

Figure 6 and 7 shows how the F-T, SCT-CPO, E-RWGS or A-RWGS and steam or water electrolysis can be integrated by feeding the SCT-CPO reactor either with hydrocarbon feedstocks that are gaseous at the reactor inlet temperatures and with part or all the F-T recycle gas for reducing or completely avoiding any purge gas stream. As above mentioned, the gaseous hydrocarbon feedstock can be composed by natural gas, liquefied petroleum gas (LPG), naphtha and/or gaseous mixtures having a biomass origin, and/or gaseous mixtures produced by other industrial activities; such as refinery off-gases, gaseous feedstock associated to chemical and petrochemical productions, gaseous feedstocks associated to oil productions, gaseous feedstocks associated to the iron and steel productions such as blast furnace gases (BFG), coke oven gases (COG), direct reduction gases (DRG).

To explain the reactivity features that are produced with the SCT-CPO reactors and that allows the integration of this technology with the innovative process schemes that are here proposed we report the following information.

The thermo-chemical properties of the reaction environment produced in short contact time conditions during the SCT-CPO in a heterogeneous catalytic fixed bed reactor fed with a premixed $CH_4$, Steam, $CO_2$ and $O_2$ stream, can be discussed considering the system composed by the by equations [15-16], [4], [6], [13]

8

$$CH_4 + 2O_2 = CO_2 + 2H_2O \qquad\qquad \Delta H° = -803.0 \text{ kJ/mol} \qquad [15]$$

$$CH_4 + \tfrac{1}{2} O_2 = CO + 2 H_2 \qquad\qquad \Delta H° = -38 \text{ kJ/mol} \qquad [16]$$

$$CO_2 + H_2 \rightarrow CO + H_2O \qquad\qquad \Delta H° = 41.0 \text{ kJ/mol} \qquad [5]$$

$$CH_4 + CO_2 = 2CO + 2 H_2 \qquad\qquad \Delta H° = 247.3 \text{ kJ/mol} \qquad [6]$$

$$CH_4 + H_2O = 3H_2 + CO \qquad\qquad \Delta H° = +206 \text{ kJ/mole} \qquad [13]$$

The exothermic total oxidation reaction [15] has the highest probability to occur at the beginning of the bed, while the endothermic steam-$CO_2$ reforming reactions [6] and [13] and the mildly endothermic (RWGS) reactions [5] would have the highest probability to occur in following zone. Noteworthy by increasing the reaction temperature above 830 °C reaction [5] is shifted on the right side and favoured with respect to steam-$CO_2$ reforming [6] and [13]. However, we found that the extent and the localization of these reactions inside the catalytic bed is greatly affected by physical and chemical factors. Total combustion [15] has been found be the most competitive reaction on noble metal base (Rh, Ru, Ir, Pt, Pd) catalysts at "relatively low temperatures" below 750 °C and at high $O_2$ partial pressure.

These are typically the conditions produced at the beginning of the catalytic beds in tubular reactors operated at "high" contact time values (e.g., above 1 s). In these cases, we found that the thermal profiles of the reaction environments are determined by the strongly exothermic reaction [15] with a minor contribution of reactions [16] and [4], followed by the strongly endothermic steam-$CO_2$ reforming reactions [6] and [13].

These conditions originate very large axial temperature gradients and moreover, the energy release associated to total combustion also determines the propagation of the heterogeneous reactions into the gaseous phase originating a rather unselective radical chemistry leading to unsaturated molecules and soot formation.

Indeed, we have found that with tubular reactors the catalytic partial oxidation reactions cannot be performed at high pressures since reaction [15] cannot be controlled and propagate reactions into the gaseous phase with the risk of flame ignition particularly at high pressure (e.g., above 10 ATM) but in any case, producing some radical reactions leading to the formation of unsaturated hydrocarbons precursors of solid carbonaceous compounds.

Instead, it has been found that it is possible that the solid catalyst temperatures reach values higher than 1000 °C while the gas remains relatively cool by utilizing a reaction environment geometry that allows to reduce the contact time at the entrance of the catalytic bed to few milliseconds and that allows the expansion of the reaction volume when the temperature and the mole flow increases due to the progressing of the reaction. This effect is obtained by adopting a truncated shape geometry of the catalytic bed and catalyst geometrical features that allow to reduce the pressure drop inside the reaction zone.

Accordingly, it has been found that in these short contact time conditions, the methane conversion largely depends on the $O_2$/C ratios while is almost unaffected by the addition of steam and $CO_2$. This addition instead modifies the $H_2$/CO ratios in the produced synthesis gas clearly indicating that the reactivity is largely determined by the direct partial oxidation [16] and by the RWGS reaction [4].

Figure 8 shows qualitative pictures of the Enthalpy/Temperature profiles obtained at (A) low mass velocity, high contact time, tubular geometry of the catalytic bed and (B) high mass velocity, short contact time, truncated cone geometry of the catalytic bed. The black solid line represents the total enthalpy variation.

Figure 9 shows the main zones of the SCT-CPO reactor including a truncated cone reaction zone.

The cylindrical first portion includes a mixing inlet zone and a first thermal shield pre-heating zone.

The central second portion includes a reaction zone,

The cylindrical third portion includes a second thermal shield and a reactor exit zone.

The angle $\alpha$ shown in Figure 9 is clearly lower than 80° and preferentially comprised between 75° and 30°.

The other geometrical features namely the: i) truncated cone inlet radius R1, ii) the truncated cone exit radius R2, iii) the truncated cone length L and the catalytic bed filling are designed for allowing pressure drop values ($\Delta$P) inside the catalytic bed between 0.1 and 10 ATM and preferentially between 0.5 and 5 ATM.

To this purpose the ratios R1/R2 must be comprised between 0.9 and 0.1 and preferentially between 0.8 and 0.4 and the shapes of the filling of the catalyst bed need to be defined for minimizing the pressure drop conditions by utilizing pelletized or monolith structures and their combinations.

It has also been noted that the existence of a non-thermal equilibrium between the gas and the solid phases and this has been explained considering that the chemical heat generated at the surfaces and emitted by radiation, is absorbed, and scattered much better by the solid than by the gaseous phase and is transferred along the catalytic bed from the hotter towards the cooler points smoothing the solid surface temperatures. The main experimental observations on the thermo-chemical properties of the SCT environments, performed after optimization of the reaction environment characteristics, are synthesized as follows:

i) the temperature of the solid phase raises steeply at the beginning of the bed and the temperature profiles are smoothed through radiative and conduction mechanisms in the axial and radial directions
ii) temperature differences are originated between the gas and the solid phases,
iii) local surface temperatures values result higher than the adiabatic temperatures
iv) gas temperatures are always lower than the adiabatic temperatures and gradually increase from the entrance to the exit of the bed

It has also been found that part of the reaction heat is transferred towards the incoming reactants inside the first thermal shield zone and in this way a reactant pre-heating internal to the reactor is also achieved.
Accordingly, in the described process solutions, the $CO_2$ emissions are mainly related to the E.E. consumption required for:

i) compressing the feedstock (compression energy that would be required for any syngas production technology),
ii) for obtaining the $O_2$ flow for instance with an Air Separation Unit (ASU),
iii) in some cases, for performing steam electrolysis and in some others for operating an electrified reverse water gas shift reactor (E-RWGS)

Noteworthy, when steam electrolysis is included in the process architectures here described, not only the $H_2$ stream participate to the process flows and particularly to the E-RWGS and/or the A-RWGS sections, but also the co-produced $O_2$ streams are utilized by the SCT-CPO reactor, and this increases the energy efficiency of the overall solutions.
In conclusion it is disclosed that only the SCT-CPO reactor with the features above described allows the recycle of the F-T tail gases and of the off-gases produced by the separation and/or upgrading of the F-T primary products, for their utilization in the synthesis gas production. These gases mainly include C1-C4 hydrocarbons with minor amounts of C5-C10 hydrocarbons, and these molecules are mainly constituted by saturated hydrocarbons with a component of unsaturated hydrocarbons. Particularly the unsaturated hydrocarbons would originate carbon formation reactions in the known syngas production technologies but this problem would also be present in SCT-CPO reactors with features different from those above described. Indeed, tubular cylindrical SCT-CPO reactors would be immediately clogged by carbon formation reactions due to heterogenous cracking and polymerization reactions of the unsaturated molecules particularly occurring before the catalytic bed and by unselective radical reactions occurring in the gas phase either in the inlet and mixing zones and in the catalytic zones.

**Claims**

1. Process to produce hydrocarbon compounds by converting syngas by means of a Fischer-Tropsch process, **characterized in that** said syngas comprises a part produced by means of a short contact time catalytic partial oxidation process and a part produced by reverse water gas shift process; wherein:

   A) said short contact time catalytic partial oxidation process uses a feedstock comprising:

   i) a first stream comprising a mixture comprising carbon dioxide included in one or more of natural gas, associated gases, off-gases of industrial activities, biogas, blast furnace gases, coke oven gases, direct reduction gases and carbon dioxide captured from gaseous streams, said carbon dioxide being from 5 to 50% v/v of said mixture;
   ii) a second stream comprising oxygen or air enriched with oxygen, and optionally steam; wherein:

   - said oxygen is obtained from electrolysis of water <u>and</u> from air; and
   - said electrolysis of water or steam produces also hydrogen which is mixed to the syngas and fed to said Fischer-Tropsch process;

   iii) a third stream comprising tail gas released from said Fischer-Tropsch process;

said short contact time catalytic partial oxidation process is carried out in a reactor on a catalytic bed comprising a portion with truncated cone geometry operated at a gas hourly space velocity from 15,000 to 500,000 h$^{-1}$;

   B) said reverse water gas shift process uses a feedstock comprising a mixture of hydrogen and carbon dioxide, wherein:
   iii) said carbon dioxide is from 10 to 70% v/v of said mixture;

   iv) said hydrogen is from 10 to 70% v/v of said mixture is optionally produced by the water/steam electrolysis section.
   C)said liquid hydrocarbon compounds are collected from a Fischer-Tropsch reactor in which said Fischer-Tropsch process is carried out.

2. Process according to claim 1, wherein said oxygen from air of said step A) ii) is obtained by means of a method selected from cryogenic air separation, vacuum pressure swing adsorption, membrane separation.

3. Process according to any claim 1 - 2, wherein said reverse water gas shift process is carried out in a reactor heated by electrical means.

4. Process according to according to any claim 1-3, wherein said reverse water gas shift reactor is heated by combustion of fuel.

5. Process according to any claim 1-4, wherein a portion of said syngas produced in said short contact time catalytic partial oxidation process is fed to said reverse water gas shift process to increase the amount of hydrogen fed from said hydrolysis of water.

6. Process according to claim 5, wherein the ratio of hydrogen/carbon dioxide fed to said reverse water gas shift reactor is at least 1/1 v/v.

7. Process according to any claim 1-6, wherein said reverse water gas shift reactor is an electrified reverse water gas shift reactor (E-RWGS) or an autothermal reverse water gas shift reactor d (A-RWGS).

8. Apparatus for producing synthetic hydrocarbon compounds with the process according to any claim 1-7, comprising a short contact time catalytic partial oxidation reactor including a first portion having a cylindrical shape consisting of an inlet a mixing zone and a thermal shield zone, a second portion containing a catalytic bed having a truncated cone shape, and a third portion having a cylindrical shape with a diameter greater than the diameter of said first cylindrical portion, followed by a second thermal shield zone, wherein:

   a) in said second portion having the shape of a truncated cone the upper base is smaller than the bottom base;
   b) said upper base of said truncated cone is joined to said first cylindrical portion and said bottom base is joined to said third cylindrical portion; and
   c) the external angle ($\alpha$) of said truncated cone at the upper base is lower than 85° and preferably comprised between 75° and 30°.

9. Apparatus according to claim 8, wherein said upper base of said catalytic bed having the shape of a truncated inverted cone has a diameter R1 and said bottom base has a diameter R2, wherein the ratio R1/R2 is from 0.9 to 0.1, preferably from 0.8 to 0.4.

**FIG. 1**

**FIG. 2**

**FIG. 3A**

**FIG. 3B**

EP 4 471 111 A1

**FIG. 4**

EP 4 471 111 A1

FIG. 5

FIG. 6

**FIG. 7**

EP 4 471 111 A1

FIG. 8

FIG. 9

Europäisches
Patentamt

European
Patent Office

Office européen
des brevets

# EUROPEAN SEARCH REPORT

Application Number

EP 24 17 7029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2016/016256 A1 (ENI SPA [IT]) 4 February 2016 (2016-02-04) | 1-7 | INV.<br>C10K3/02 |
| A | * figures 1-7 *<br>* page 8, line 1 - page 16, line 15 * | 8,9 | C10G2/00<br>C01B3/12<br>C01B3/38 |
| X,D | US 2010/294994 A1 (BASINI LUCA [IT] ET AL) 25 November 2010 (2010-11-25)<br>* figures 1-2 *<br>* paragraph [0018] - paragraph [0098] * | 8,9 | C01B3/48<br>C10J3/00<br>C25B1/04 |
| A | US 2012/301391 A1 (BASINI LUCA EUGENIO [IT] ET AL) 29 November 2012 (2012-11-29)<br>* figures 1-2 *<br>* paragraph [0052] - paragraph [0071] * | 1-9 | |
| A | BASINI ET AL: "Fuel rich catalytic combustion: Principles and technological developments in short contact time (SCT) catalytic processes",<br>CATALYSIS TODAY, ELSEVIER, AMSTERDAM, NL, vol. 117, no. 4,<br>15 October 2006 (2006-10-15), pages 384-393, XP027976254,<br>ISSN: 0920-5861<br>[retrieved on 2006-10-15]<br>* paragraph [0001] - paragraph [0004] * | 1-9 | |
| | | | **TECHNICAL FIELDS SEARCHED (IPC)**<br><br>C10G<br>C01B<br>C10K<br>C10J<br>C25B |
| A | US 2014/288195 A1 (CASTELLI PIERRE [FR] ET AL) 25 September 2014 (2014-09-25)<br>* figures 1-2 *<br>* paragraph [0021] - paragraph [0087] * | 1-9 | |

The present search report has been drawn up for all claims

| Place of search | Date of completion of the search | Examiner |
|---|---|---|
| The Hague | 10 September 2024 | Bernet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 471 111 A1

## ANNEX TO THE EUROPEAN SEARCH REPORT
## ON EUROPEAN PATENT APPLICATION NO.

EP 24 17 7029

10-09-2024

| Patent document cited in search report | Publication date | Patent family member(s) | | Publication date |
|---|---|---|---|---|
| WO 2016016256 A1 | 04-02-2016 | NONE | | |
| US 2010294994 A1 | 25-11-2010 | CA | 2705690 A1 | 28-05-2009 |
| | | DK | 2238073 T3 | 26-08-2019 |
| | | EP | 2238073 A1 | 13-10-2010 |
| | | ES | 2742549 T3 | 14-02-2020 |
| | | RU | 2010122321 A | 27-12-2011 |
| | | US | 2010294994 A1 | 25-11-2010 |
| | | US | 2013028815 A1 | 31-01-2013 |
| | | WO | 2009065559 A1 | 28-05-2009 |
| US 2012301391 A1 | 29-11-2012 | CA | 2783744 A1 | 23-06-2011 |
| | | EP | 2512980 A1 | 24-10-2012 |
| | | IT | 1398292 B1 | 22-02-2013 |
| | | RU | 2012126748 A | 27-01-2014 |
| | | US | 2012301391 A1 | 29-11-2012 |
| | | WO | 2011072877 A1 | 23-06-2011 |
| US 2014288195 A1 | 25-09-2014 | BR | 112014010293 A2 | 02-05-2017 |
| | | CA | 2853209 A1 | 10-05-2013 |
| | | CN | 103930523 A | 16-07-2014 |
| | | EP | 2788453 A1 | 15-10-2014 |
| | | FR | 2982272 A1 | 10-05-2013 |
| | | US | 2014288195 A1 | 25-09-2014 |
| | | WO | 2013064552 A1 | 10-05-2013 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2016016256 A1
- US 2010294994 A1
- WO 2016016257 A1
- WO 2016016253 A1
- WO 2016016251 A1
- WO 2011151082 A
- WO 2009065559 A
- WO 2011072877 A
- US 2009127512 A
- WO 2007045457 A
- WO 2006034868 A
- US 2005211604 A
- WO 2005023710 A
- WO 9737929 A
- EP 0725038 A
- EP 0640559 A
- WO 2022263409 A1

### Non-patent literature cited in the description

- **BASINI, LUCA.** Issues in H2 and synthesis gas technologies for refinery, GTL and small and distributed industrial needs. *Catalysis Today,* October 2005, vol. 106 (1-4), 34
- **BASINI, L.** Fuel rich catalytic combustion: Principles and technological developments in short contact time (SCT) catalytic processes. *Catalysis Today,* 15 October 2006, vol. 117 (4), 384-393
- **G. IAQUANIELLO ; E. ANTONETTI ; B. CUCCHIELLA ; E. PALO ; A. SALLADINI ; A. GUARINONI ; A. LAINATI ; L. BASINI.** *Natural Gas Catalytic Partial Oxidation: A Way to Syngas and Bulk Chemicals Production | IntechOpen, http://dx.doi.org/10.5772/48708*
- **L.E. BASINI ; A. GUARINONI.** Short Contact Time Catalytic Partial Oxidation (SCT-CPO) for Synthesis Gas Processes and Olefins Production. *Ind. Eng. Chem. Res.,* 2013, vol. 52, 17023-17037, https://doi.org/10.1021/ie402463m